**Europäisches Patentamt**

**European Patent Office**

**Office européen des brevets**

(11) Veröffentlichungsnummer: **0 035 628**
A2

# (12) EUROPÄISCHE PATENTANMELDUNG

(21) Anmeldenummer: **81100286.4**

(22) Anmeldetag: **16.01.81**

(51) Int. Cl.³: **F 16 J 1/16**

(30) Priorität: **12.03.80 DE 3009424**

(43) Veröffentlichungstag der Anmeldung:
**16.09.81 Patentblatt 81/37**

(84) Benannte Vertragsstaaten:
**FR GB IT**

(71) Anmelder: **Messerschmitt-Bölkow-Blohm Gesellschaft mit beschränkter Haftung München**
**Robert-Koch-Strasse**
**D-8012 Ottobrunn(DE)**

(72) Erfinder: **Herkert, Claus-Michael, Dipl.-Ing.**
**Herzog-Albrecht-Strasse 67**
**D-8011 Zorneding(DE)**

(72) Erfinder: **Bongers, Bernd, Dipl.-Ing.**
**Nelkenweg 2**
**D-8011 Kirchheim(DE)**

(54) **Kolbenbolzen.**

(57) Ein Kolbenbolzen, insbesondere für Brennkraftmaschinen, hat eine abriebfeste, harte Metalloberfläche aus einem dünnwandigen Mantelrohr (2) aus Metall von hoher Festigkeit und einen mit diesem fest verbundenen inneren Kern. Bei diesem Kolbenbolzen wird ein besonders niedriges Gewicht dadurch erzielt, daß der Kern (3) aus im wesentlichen in Längsrichtung unidirektionalem faserverstärkten Kunststoff besteht.

Fig.1

EP 0 035 628 A2

## Kolbenbolzen

Die Erfindung betrifft einen Bolzen für Kolben, insbesondere
von Brennkraftmaschinen, und Verfahren zur Herstellung dieses
Bolzens.

Bekannte Kolbenbolzen von Brennkraftmaschinen bestehen im allgemeinen aus einem dickwandigen Stahlrohr, wodurch sichergestellt
werden soll, daß er durch die an ihm angreifenden Kräfte nicht
verbogen und verformt wird. Da der Kolbenbolzen als Verbindungsglied zwischen Kolben und Pleuel ein Teil der mit hohen Beschleunigungen umlaufenden Massen ist, werden durch sein Gewicht die
auf den Kurbeltrieb wirkenden Massenkräfte wesentlich erhöht.

Es ist Aufgabe der Erfindung, einen Kolbenbolzen zu schaffen, der
bei niedrigem Gewicht auch größten Beanspruchungen standhält.

Diese Aufgabe wird erfindungsgemäß gelöst durch die kennzeichnenden Merkmale des Anspruchs 1. Vorteilhafte Ausgestaltungen der
Erfindung enthalten die Ansprüche 2 bis 7.

Der erfindungsgemäße Kolbenbolzen besteht z.B. aus einem 0,2 bis
0,5 mm starken Mantelrohr aus Stahl und einem Kern aus faserverstärktem Kunststoff, der ein spezifisches Gewicht von etwa 1,6 bis
2,0 g/cm³ aufweist. Dadurch würde sich bereits bei einem vollzylindrischen Kern das Gewicht gegenüber einem üblichen dickwandigen Stahlbolzen verringern. Wenn das Mantelrohr z.B. aus hochfestem Titan und der Kern rohrförmig gewählt wird, ergibt sich
eine erhebliche Gewichtseinsparung und somit eine wesentliche Verringerung der auf den Kurbeltrieb wirkenden Massenkräfte. Ein
weiterer Vorteil des erfindungsgemäßen Kolbenbolzens besteht
darin, daß er sich aufgrund seiner großen Wandstärke nicht verbiegen und verformen kann.

/

Verfahrensmerkmale zur Herstellung des Kolbenbolzens sind durch die Ansprüche 8 bis 11 gegeben.

Die Merkmale der Erfindung und deren Vorteile ergeben sich auch aus der nachfolgenden Beschreibung von Ausführungsbeispielen anhand der Zeichnung. Es zeigen:

Fig. 1    einen Bolzen mit einem vollzylindrischen Strang und einer Wickellage aus faserverstärktem Kunststoff;

Fig. 2    einen Bolzen mit einem vollzylindrischen Strang und zwei Wickellagen aus faserverstärktem Kunststoff;

Fig. 3    einen rohrförmigen Bolzen mit drei Wickellagen aus faserverstärktem Kunststoff;

Fig. 4    eine schematische Darstellung zur Herstellung eines Bolzens mittels einer Kalibrierdüse und

Fig. 5    eine schematische Darstellung zur Herstellung eines Bolzens mit einem aus Stahlblech gewalzten Mantelrohr.

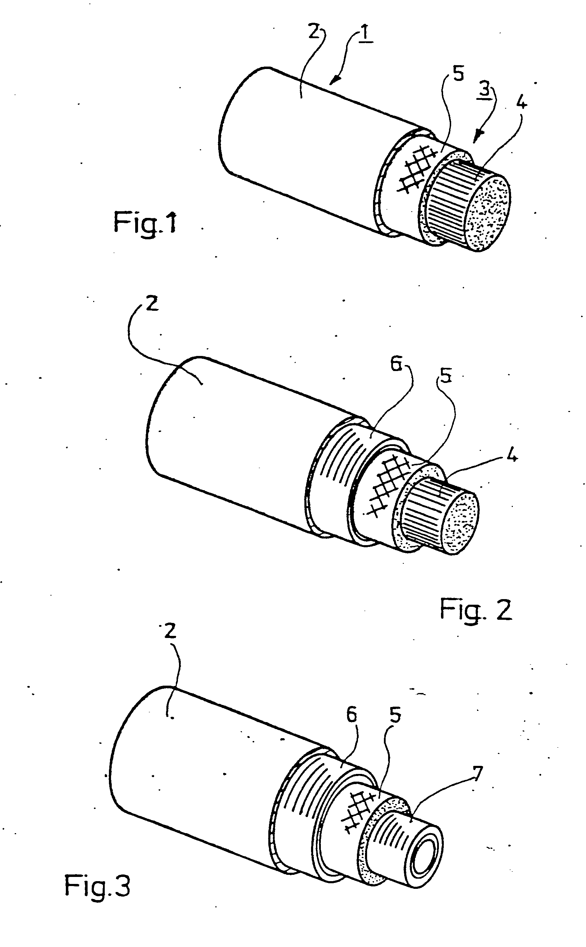

Ein in Fig. 1 dargestellter Kolbenbolzen 1 besteht aus einem dünnwandigen Mantelrohr 2 aus Metall mit einer abriebfesten und harten Oberfläche, vorzugsweise Stahl oder Titan, und einem Kern 3 aus faserverstärktem Kunststoff. Der Kern 3 besteht hierbei aus einem Strang 4 aus längsgerichteten Lang- oder Kurzfasern, auf dem eine mehrlagige Schicht 5 aus mit Kunstharz getränkten Fasern kreuzweise unter $\pm$ 45$^{\circ}$ aufgewickelt ist. Entsprechend Fig. 2 ist auf den Strang 4 und die Schicht 5 aus den kreuzweisen Wickellagen noch zusätzlich eine Schicht 6 aus radialen Wickellagen aufgebracht. Die Schicht 5 aus den kreuzweisen Wickellagen nimmt vor allem die Scherbeanspruchung auf und die Schicht 6 aus den radialen Wickellagen dient besonders bei einem extrem dünnen Mantelrohr 2 zur Steifigkeitserhöhung. Der innere Strang 4 dient zur Stützung des gesamten Kolbenbolzens 1, wodurch sicher ein Verbiegen

/

und Ovalwerden vermieden wird. Eine gleiche Wirkung, aber eine wesentliche Gewichtsverminderung wird erzielt, wenn entsprechend Fig. 3 der Strang 4 durch eine weitere Schicht 7 aus radialen Wickellagen ersetzt wird.

Je nach Art der Beanspruchung können für die Wickellagen die Fasern gewählt werden. Für geringe Beanspruchungen reichen preiswerte Fasern mit niedrigem Elastizitätsmodul aus, wie z.B. Glas- oder Aramidfasern. Für hohe Beanspruchungen kann unter Verwendung von hochmoduligen Fasern, wie z.B. Kohlenstoff- oder Borfasern, für jede Schicht die optimale Faserart mit dem jeweilig passenden Kunstharz verwendet werden.

Die Fertigung des Kolbenbolzens 1 erfolgt zweckmäßig so, daß zuerst der Kern 3 vollständig vorgefertigt wird. Bei Verwendung eines Stranges 4 entsprechend den Fig. 1 und 2 wird dieser unter Verwendung von unidirektionalen Lang- oder Kurzfasern unter Zusatz von Kunstharz entweder stranggepreßt oder mit Hilfe einer Rovingziehanlage und anschließender Kalibrierdüse gezogen und danach ausgehärtet. Auf den ausgehärteten Strang 4 werden dann in bekannter Weise mit einer Verseilanlage oder Wickelmaschine die Wickellagen 5 und 6 aufgebracht. Der Strang 4 kann auch unter Verwendung eines inneren Dornes, der nach der Fertigung wieder entfernt wird, hohl ausgeführt werden. Bei einem Bolzen entsprechend Fig. 3 werden die drei Wickellagen 5,6 und 7 auf einen Wickeldorn aufgebracht, der nach dem Aushärten wieder entfernt wird.

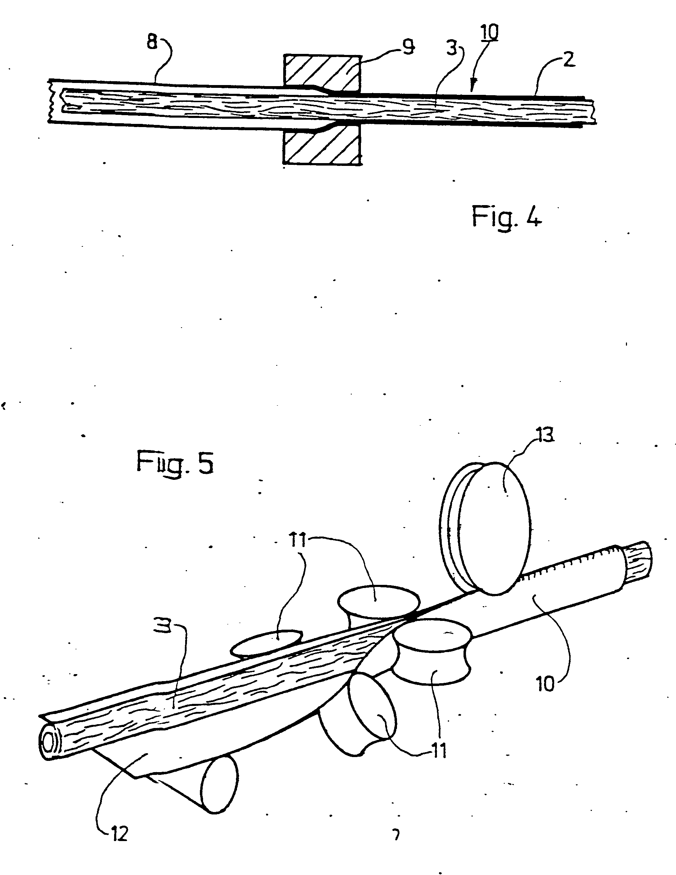

Die Fertigstellung des Kolbenbolzens 1 erfolgt entsprechend Fig. 4 in der Weise, daß ein beliebig langer Abschnitt des ausgehärteten Kernes 5 in ein dünnwandiges Rohr 8, welches gegenüber dem Kern ein geringes Übermaß aufweist, eingeführt wird. Dann werden beide Teile durch eine Kalibrierdüse 9 gezogen, womit ein Kolbenbolzenrohr 10 mit dem auf dem Kern 3 festsitzenden Mantelrohr 2 fertiggestellt ist.

Nach der Fig. 5 kann das Kolbenbolzenrohr 10 auch mit einer Bandwalzeinrichtung 11 fertiggestellt werden. Dabei wird ein Stahlband 12 von entsprechender Breite um den Kern 3 herumgewalzt.
Nach dem Verschweißen der Nahtstelle mit einer Schweißvorrichtung 13, die nur eine eng begrenzte Erhitzung zuläßt, ist das
Kolbenbolzenrohr 10 fertiggestellt. Dabei wird z.B. ein Induk-
tions- oder Elektronenschweißverfahren verwendet. Es besteht auch
die Möglichkeit, das Stahlband 12 mit dem Kern 3 unter Wärmeeinwirkung zu verkleben. Dabei wird das Stahlband 12 mit einer
Klebefolie verbunden oder mit Kleber beschichtet. Eventuell kann
dabei das Verschweißen der Nahtstelle entfallen.

Das Kolbenbolzenrohr 10 wird darauf auf Länge geschnitten und
dann zur endgültigen Fertigung des Kolbenbolzens 1 einer Oberflächenbehandlung zugeführt.

0035628

MESSERSCHMITT-BÖLKOW-BLOHM
GESELLSCHAFT
MIT BESCHRÄNKTER HAFTUNG
MÜNCHEN

Ottobrunn, 27.11.1980
BT01-Hi/le

8698

_5_

Kolbenbolzen

P a t e n t a n s p r ü c h e

1. Bolzen für Kolben, insbesondere von Brennkraftmaschinen,
   mit einer abriebfesten, harten Metalloberfläche, aus
   einem dünnwandigen Mantelrohr (2) aus Metall von hoher
   Festigkeit und einem mit diesem fest verbundenen inneren
   Kern dadurch g e k e n n z e i c h n e t , daß der
   Kern (3) aus im wesentlichen in Längsrichtung unidirektionalem faserverstärktem Kunststoff besteht.

2. Bolzen nach Anspruch 1, dadurch g e k e n n z e i c h -
   n e t, daß der Kern (3) aus mehreren unterschiedlichen
   Schichten unterschiedlicher Faserorientierung, -art und
   -material besteht.

3. Bolzen nach dem Anspruch 1 oder 2, dadurch g e k e n n -
   z e i c h n e t, daß zwischen dem Kern (3) und dem
   Mantelrohr (2) eine Klebeschicht vorgesehen ist.

4. Bolzen nach Anspruch 2, dadurch g e k e n n z e i c h -
   n e t, daß auf dem inneren Strang (4) erst eine Schicht
   (5) aus kreuzweisen Wickellagen und darauf eine weitere
   Schicht (6) aus radialen Wickellagen aufgebracht sind.

5. Bolzen nach Anspruch 1, dadurch g e k e n n z e i c h -
n e t , daß der innere Kern (4) aus faserverstärktem
Kunststoff röhrförmig ist und aus drei Schichten
(5,6,7) von Wickellagen besteht.

6. Bolzen nach Anspruch 5, dadurch g e k e n n z e i c h-
n e t , daß die innere und äußere Schicht (6,7) aus
radialen Wickellagen und die mittlere Schicht (5) aus
kreuzweisen Wickellagen besteht.

7. Bolzen nach den Ansprüchen 1 bis 6, dadurch g e k e n n -
z e i c h n e t , daß für den Strang (4) Glasfasern und
für die Schichten (5,6,7) aus Wickellagen Fasern aus
Glas, Kohlenstoff oder Kunststoff verwendet sind.

Fig.1

Fig. 2

Fig.3

Fig. 4

Fig. 5